Europäisches Patentamt

European Patent Office

Office européen des brevets

(19)

(11) Numéro de publication: **0 072 711**

**A1**

(12) # DEMANDE DE BREVET EUROPEEN

(21) Numéro de dépôt: **82400140.8**

(22) Date de dépôt: **26.01.82**

(51) Int. Cl.³: **E 01 H 1/04**
**B 62 J 39/00, B 62 K 11/00**

(30) Priorité: **07.08.81 FR 8115399**

(43) Date de publication de la demande:
**23.02.83 Bulletin 83/8**

(84) Etats contractants désignés:
**BE CH DE GB IT LI LU NL**

(71) Demandeur: **Decaux, Jean-François**
**147, Avenue Charles de Gaulle**
**F-92200 Neuilly sur Seine(FR)**

(72) Inventeur: **Decaux, Jean-Claude**
**147, Avenue Charles de Gaulle**
**F-92200 Neuilly sur Seine(FR)**

(74) Mandataire: **Rodhain, Claude**
**Cabinet Claude RODHAIN 30, rue La Boétie**
**F-75008 Paris(FR)**

(54) **Motocycle pour le nettoyage des sols.**

(57) Le motocycle comporte deux couples de brosses (9,10) entraînées en sens opposé, disposés de part et d'autre de la roue arrière (3) et logés dans un carter (8) oscillable entre une position de repos éloignée du sol et une position de nettoyage, ce carter (8) entourant partiellement et de façon symétrique ladite roue (3) et sa largeur étant sensiblement égale à la largeur hors-tout de la moto au niveau du guidon (6). Ce motocycle trouve une application avantageuse dans le ramassage des excréments de chien.

EP 0 072 711 A1

./...

FIG.1

FIG.2

Motocycle pour le nettoyage des sols.

La présente invention concerne un motocycle de ramassage de détritus ou autres, de faible volume, tels que des excréments de chiens, du type comportant un dispositif de nettoyage à organes rotatifs de nettoyage, disposé dans un carter et mobile entre une position de repos (escamotée) éloignée du sol et une position de nettoyage, et des moyens de transmission reliant le dispositif de nettoyage à un moteur d'entraînement.

En milieu urbain, notamment dans les grandes villes, un problème important est celui du nettoyage des chaussées et trottoirs, surtout en raison de ce que l'on a l'habitude de désigner sous le terme de pollution canine. On connaît assurément des véhicules de nettoyage des chaussées, de type industriel à brosse, effectuant simultanément un lavage de la chaussée, mais ils sont peu appropriés pour circuler sur les trottoirs par suite de leur taille, de leur manque de maniabilité, etc... Hormis de tels véhicules encombrants à quatre roues, on connaît également des véhicules à deux roues, plus légers et plus maniables, comportant un dispositif de nettoyage installé latéralement et qui sont donc encombrants. Or. connaî: aussi un motocycle tel que, par exemple, le motocycle comportant des moyens assurant le nettoyage du sol conformément au brevet français n° 79 23 215, déposé par le demandeur. Un tel motocycle comporte au moins un équipage mobile muni d'une brosse de nettoyage logée dans un carter pouvant pivoter sur le cadre du motocycle en étant actionnée par le pilote du véhicule, à l'aide du pied, pour être amenée en contact avec le sol. Dans une forme de réalisation de ce motocycle, un tel dispositif de nettoyage, comportant un sac de collecte des déchets, détritus ou excréments monté en aval, est installé de chaque côté du motocycle.

Bien qu'un tel véhicule soit très léger, peu encombrant et assez maniable, il présente cependant - de même que d'autres véhicules légers de ce type - un inconvénient consistant en ce que l'action de brossage est souvent insuffisante pour éliminer parfaitement du sol et collecter complètement les détritus et les excréments de chiens, surtout lorsque ceux-ci ont séché et adhèrent fermement au trottoir.

Par ailleurs, tout en cherchant à conserver au véhicule un encombrement aussi réduit que possible, et ce, notamment dans le sens de sa largeur, il est souhaitable d'avoir un récipient de collecte des détritus ou autres, d'un volume aussi important que possible et formant de préférence un ensemble compact avec le dispositif de nettoyage.

Enfin, le dispositif de nettoyage devrait pouvoir être actionné de façon simple, sans provoquer aucune gêne pour le pilote lors de la conduite du motocycle tant sur les trottoirs que lors de son déplacement sur la chaussée.

Pour remédier à l'inconvénient cité plus haut des dispositifs connus et satisfaire aux exigences indiquées, il est prévu dans un motocycle de ramassage rapide et efficace des détritus, excréments de chiens, etc.. que le carter entoure au moins partiellement et de façon symétrique l'une des roues du véhicule et que sa largeur soit sensiblement égale à la largeur hors-tout du véhicule au niveau du guidon et que les organes rotatifs de nettoyage logés dans le carter soient constitués par au moins un couple de brosses tournant en sens opposé.

Selon une forme de réalisation préférée de l'invention, il est prévu deux couples de brosses rotatives disposés de part et d'autre de la roue du véhicule et les brosses de chaque couple possèdent des diamètres différents et sont de nature différente.

Ainsi, grâce à cet agencement, d'une part, l'action de nettoyage et de préhension avec deux brosses coagissantes tournant en sens opposé est plus efficace tant du point de vue du décollement des détritus, excréments ou autres matières, que de leur collecte entre les deux brosses, et, d'autre part, les deux couples de brosses enserrant, de part et d'autre, la roue du véhicule, permettent un enlèvement complet des matières sur pratiquement toute la largeur hors-tout du véhicule, le carter logeant ces deux couples de brosses et entourant partiellement le véhicule, fournissant à ce dernier un aspect compact et plus esthétique, tout en permettant un logement pour des sacs ou des bacs de collecte des matières d'un volume assez important ainsi que la possibilité de rangement de sacs vides et autres.

Selon une variante avantageuse de réalisation de l'invention, le dispositif de nettoyage est relié au carter du motocycle au moyen d'un équipage mobile permettant de faire osciller le dispositif de nettoyage, muni de son carter, entre une position relevée de repos et une position abaissée de nettoyage, ledit équipage mobile comprenant deux montants symétriques par rapport à l'axe longitudinal du motocycle, qui sont solidaires de manchons enserrant un axe transversal et horizontal du dispositif de nettoyage et sont réunis au niveau de leur extrémité supérieure à une barre horizontale de relevage montée de façon à pouvoir pivoter sur le cadre du motocycle. Grâce à cette disposition, un seul équipage mobile sert à déplacer l'ensemble du dispositif de nettoyage et du carter associé et donc ne nécessite qu'une manoeuvre.

D'autres caractéristiques et avantages de l'invention ressortiront de la description qui va suivre, à titre d'exemple non limitatif, et en regard des dessins annexés sur lesquels :

- La Fig. 1 montre une vue en élévation latérale schématique en coupe partielle du motocycle conforme à l'invention, sur laquelle le dispositif de nettoyage est représenté en position abaissée de nettoyage.

- La Fig. 2 représente une vue de dessus du motocycle selon l'invention, montrant une coupe partielle schématique au niveau d'un plan passant par les axes des brosses.

- La Fig. 3 montre une vue analogue à celle de la Fig. 1 et sur laquelle le dispositif de nettoyage est représenté en position relevée.

- La Fig. 4 montre une vue de face du motocycle selon l'invention dans une position de travail.

- La Fig. 5 montre une variante de réalisation du motocycle de la Fig. 1.

Le motocycle représenté sur les figures, par exemple un cyclomoteur, se compose de façon connue d'un cadre 1, supportant un moteur d'entraînement 2 et porté par deux roues 3, d'un siège 4, sur lequel est assis le pilote, représenté très schématiquement en 5, et d'un guidon 6.

Ce motocycle comporte, en outre, un dispositif de nettoyage désigné globalement par la référence 7, disposé dans un carter 8 qui entoure au moins partiellement, de façon symétrique, une roue 3 du motocycle, par exemple la roue arrière dans l'exemple de réalisation représenté. La largeur du carter 8 est sensiblement égale à la largeur maximum du véhicule au niveau du guidon 6.

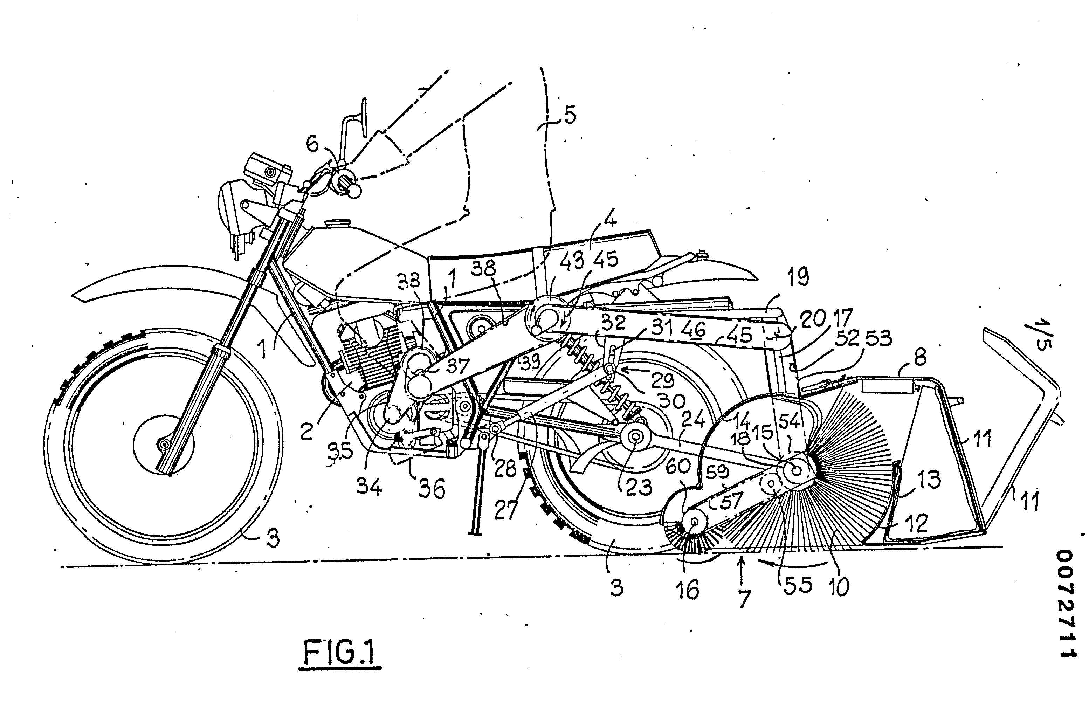

Le dispositif de nettoyage 7 se compose de deux couples d'organes rotatifs de nettoyage constitués par une petite brosse dure 9, par exemple en polypropylène, et une brosse souple de plus gros diamètre 10, par exemple en polyhexaméthylène adipamide. De préférence, le diamètre de la brosse 10 est égal à une valeur comprise entre le double et le triple de celui de la brosse 9. Par ailleurs, le carter 8, qui possède une ouverture arrière fermée par un capot articulé 11 (représenté en position ouverte 11',par un trait mixte, sur la Fig. 1), comporte une partie arrière rentrante 12 jouxtant le contour extérieur de la brosse 10 et formant logement pour un ou plusieurs sacs 13 collectant les matières rejetées par la brosse 10. Sur sa partie avant, le carter est adapté au contour extérieur de la petite brosse 9 et comporte une partie arrondie 14 jouxtant la brosse 10, mais dont la distance à l'axe 15 de la grosse brosse 10 est inférieure au rayon de cette dernière, de telle sorte que les poils souples de la brosse 10 sont comprimés au niveau de la partie 14 du carter 7, afin de se détendre pour éjecter la matière dans le sac, lorsque les poils sont libérés de cette partie 14 du carter. En outre, les surfaces intérieures de ce dernier, qui contactent les deux brosses 9 et 10, comportent un revêtement non adhérent en polyéthylène, réduisant ou éliminant un risque de collage, ou de colmatage, des matières extraites du sol par les brosses.

La brosse dure 9 est disposée, comme représenté, en avant de la brosse souple 10, suivant la direction de marche du motocycle, les deux brosses tournant horizontalement, en sens inverse, conformément aux flèches représentées sur la Fig. 1. Selon l'invention, les brosses 10 des deux couples de brosses sont montées sur le même axe de rotation 15 qui entraîne, par l'intermédiaire d'une transmission qui sera décrite ultérieurement, les axes de rotation 16 des brosses 9.

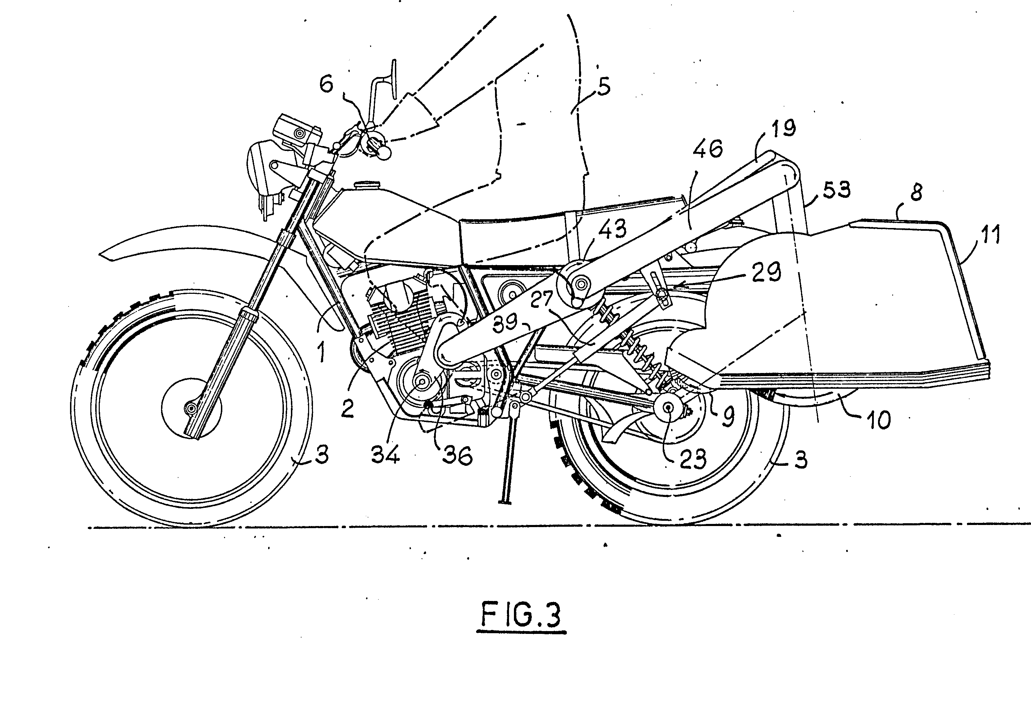

Le dispositif de nettoyage 7 est relié, ainsi que son carter 8, au cadre 1 du motocycle au moyen d'un équipage mobile permettant de déplacer par basculement, le dispositif 7 et le carter 8, entre deux positions (voir Fig. 1 et 3) et comportant deux montants inclinés 17, symétriques par rapport au plan axial du motocycle et qui sont solidaires de manchons respectifs 18 enserrant l'axe 15 portant les brosses 9 et sont réunis au niveau de leur extrémité supérieure à une barre horizontale 19 de relevage, en forme de U, montée de façon à pouvoir pivoter sur le cadre 1. La jonction entre les montants 17 et la barre 19 est réalisée au niveau d'une patte verticale 20 faisant saillie au-dessus de la base du U, dans le plan axial du motocycle, au moyen d'une fixation par rotules permettant un pivotement entre les montants 17 et la barre 19, et renforçant la rigidité en torsion des montants inférieurs. Les extrémités 21 de cette barre 19 en forme d'arceau sont, en outre, montées folles sur un arbre horizontal 22 monté rotatif sur le cadre 1.

Par ailleurs, l'axe 15 portant les brosses 10 du dispositif de nettoyage 7 est relié, avec possibilité de pivotement, à l'axe de support 23 de la roue arrière 3 du motocycle par un cadre symétrique 24 en forme générale de V dont la base est formée par une petite barre horizontale 25 portant des flasques latéraux 26 formant paliers pour l'axe 15 des brosses.

Le motocycle selon. l'invention comporte également un dispositif réglable de maintien automatique de l'ensemble du dispositif de nettoyage 7 et de son carter 8 en position relevée (position de repos), constitué par des ressorts pneumatiques 27 dont une extrémité 20 prend appui sur le cadre 1. L'autre extrémité est reliée à la barre de relevage 19 par l'intermédiaire d'un organe de réglage manuel 29 formé d'une molette de serrage 30 vissée sur une goupille filetée (non fusible) solidaire du ressort pneumatique 27 et coulissant dans une glissière 31 ménagée dans un appendice saillant 32 que comporte la barre de relevage 19.

On va maintenant décrire les moyens de transmission reliant le moteur d'entraînement 2 aux brosses 9, 10 du dispositif de nettoyage 7. Ces moyens de transmission comprennent un embrayage 33, de préférence un embrayage automatique à commande électrique au niveau d'une poignée du guidon 6, relié à une prise de force 34 du moteur par une chaîne 35 circulant dans un carter 36. La sortie de l'embrayage s'effectue par l'intermédiaire d'un engrenage 37 entraînant une chaîne 38 circulant dans un carter de protection 39 et entraînant en rotation, au moyen d'une roue à chaîne 40, l'arbre 22, déjà cité, qui comporte en outre une roue à chaîne 41 et un disque 42. Ce dernier fait partie d'un frein à disque désigné globalement par la référence 43 et dont les mâchoires 44 sont solidaires d'une extrémité de la barre 19 de relevage.

La roue à chaîne 41 est, en outre, reliée par une chaîne de renvoi 45, placés sous un carter 46, à un pignon 47 monté sur un arbre intermédiaire 48 porté par la barre 19 au moyen de paliers 49 solidaires de flasques 50. L'arbre 48 porte une roue à chaîne 51 entraînant une chaîne 52 placée dans un carter 53 et entraînant l'axe 15 des brosses 10, au moyen d'une roue à chaîne, non représentée.

Par ailleurs, l'axe 13 porte, pour chaque brosse 10, un pignon 54 engrenant avec un pignon de démultiplication 55, solidaire d'un arbre intermédiaire 56 pivotant dans les montants d'un carter 57, solidaire des manchons 18, et portant un pignon 58 entraînant par l'intermédiaire d'une chaîne 59 une roue à chaîne 60 portée par l'axe 16 de chaque brosse 9.

En outre, l'axe 16 de chaque brosse 9 est relié au carter 57 par un roulement à rotule 61, réalisant un montage flottant par rapport au plan horizontal, le flottement étant limité en haut par le carter 8 du dispositif de nettoyage et en bas, par exemple, par une butée à vis, non représentée. De plus, les axes 15 et 16 sont réunis à leurs extrémités latérales par des roulements à rotule 62, 63 à un flasque latéral 64.

Ci-après, on va décrire le fonctionnement du motocycle selon l'invention.

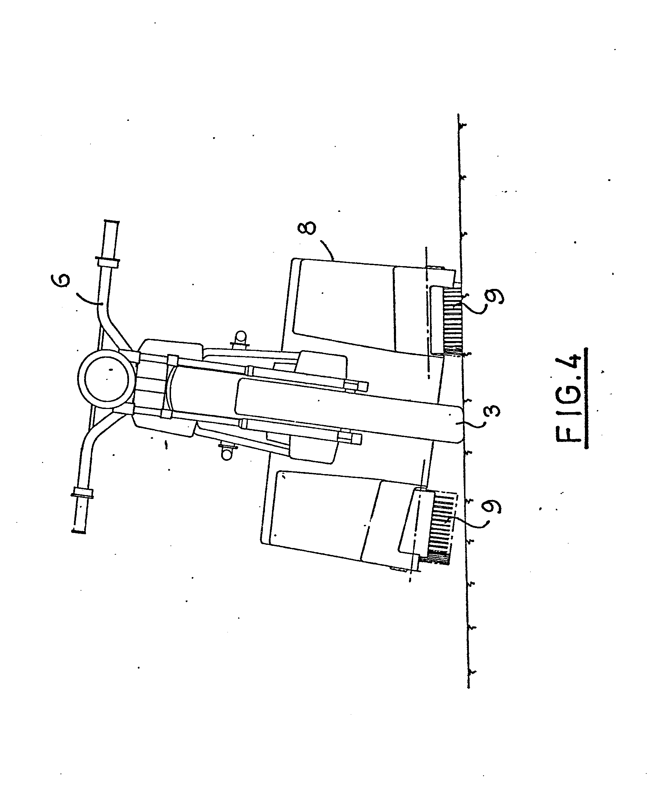

Au démarrage et en circulation, sans action de ramassage de détritus, excréments ou autres, le ressort pneumatique 27 repousse en permanence en position relevée (Fig. 3) la barre de relevage 19 du dispositif de nettoyage 7, et donc ce dernier et son carter 8 sont en position de repos écartée du sol. Lorsque le pilote veut ramasser la matière au sol, il actionne, au moyen d'une commande manuelle, non représentée, le frein à disque 43, ce qui provoque un serrage de mâchoires 44 sur le disque 42. Le couple de serrage alors exercé par les mâchoires a pour effet de faire pivoter, dans le sens dextrosum, la barre 19 autour de l'arbre 22 (flèches 65 sur la Fig. 1). La barre 19 provoque de ce fait, par l'intermédiaire des montants 17, l'abaissement de l'axe 15 des brosses 10, entraînant également l'axe 16 des brosses 9, (les brosses restent dans cette position tant que l'on maintient la commande manuelle). Ceci provoque l'approche des brosses 9 et 10 du sol. Bien que le ramassage des détritus, excréments de chiens et autres, puisse déjà se produire
à ce stade, il est judicieux, dans la pratique, afin d'éviter
l'usure prématurée des brosses, que le pilote incline légèrement le motocycle à droite ou à gauche (voir Fig. 4) afin
d'obtenir une meilleure application du couple de brosses de
droite ou de gauche, à l'entroit du trottoir requérant une
opération de nettoyage. Cette inclinaison du motocycle fait
intervenir la caractéristique de montage flottant des brosses
au moyen des paliers à rotule qui autorisent une certaine
obliquité des brosses 9, 10 par rapport au plan horizontal.

Selon une variante de l'invention, l'embrayage
43 pourrait être, non pas un embrayage électrique, commandé
par exemple au niveau du guidon 6, mais en embrayage centrifuge automatique ne démarrant qu'à partir d'une certaine
vitesse.

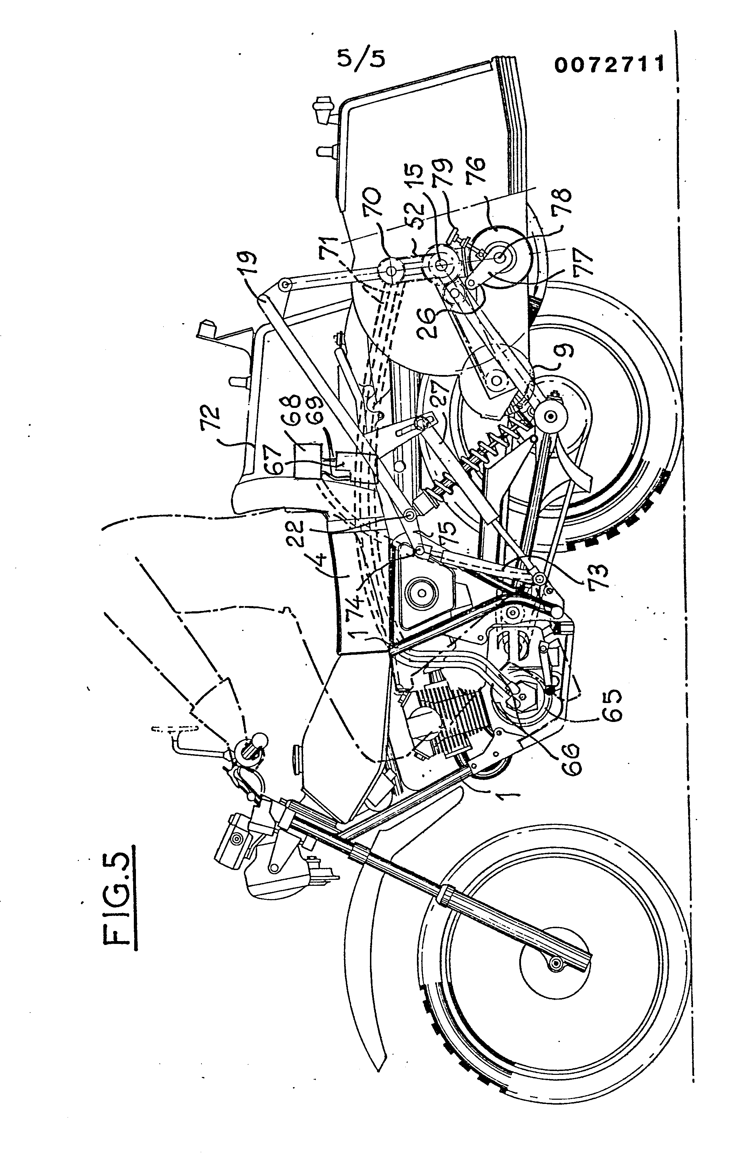

Sur la Fig. 5, on a représente une variante
de réalisation des moyens de transmission reliant le moteur 2
aux brosses 9, 10 du dispositif de nettoyage 7, tant pour la
commande de l'entraînement en rotation des brosses, que pour
la commande de l'abaissement du dispositif dans la position
de nettoyage. Il s'agit d'une transmission hydraulique constituée essentiellement d'une pompe hydraulique 65 tournant à
grande vitesse, entraîrée par le moteur 2 (à la place de
l'embrayage 33, Fig. 1) et reliée par l'intermédiaire de tubulures de raccordement 66 et d'un électro-distributeur hydraulique 67, d'une part, à un réservoir hydraulique 68 au moyen
de tubulures 69 et, d'autre part, à un moteur hydraulique 70,
destiné à entraîner les brosses et disposé dans la liaison
entre la barre de relevage 19 et l'axe des brosses 10 (cf.
Fig. 1), au moyen de tubulures 71.

Comme on peut le voir sur la Fig. 5, le siège
4 du conducteur peut être relevé à son extrémité arrière et
prendre appui sur un caisson 72 possédant différents compartiments destinés à loger le réservoir hydraulique 68, l'électro-distributeur 69, éventuellement un autre réservoir d'eau et/ou un coffre à bagages. Dans cette variante de réalisation, le système de chaînes, roues à chaînes, etc., de la Fig. 1, est donc supprimé, de même que le système de commande d'abaissement du dispositif à brosses de lavage 7, 8 formé par un frein à disque. Ce système est maintenant remplacé par un vérin hydraulique 73 dont le cylindre fixe est solidaire du cadre 1 et dont le piston est relié par articulation en 74, à une barre de liaison 75 solidaire de la barre de relevage 19, de l'autre côté de l'arbre horizontal fixe 22 et pouvant pivoter autour de cet arbre, représenté en position relevée sur la Fig. 5 (position correspondant à celle de la Fig. 3). Le vérin 73 est relié par une tubulure 76 au réservoir hydraulique 68.

L'actionnement du moteur hydraulique 70 et du vérin hydraulique 73 peut s'effectuer simultanément ou séparément à l'aide d'un seul ou de deux boutons électriques de commande, non représentés sur la figure, situés de préférence sur le guidon et qui sont reliés d'une façon classique, non représentée, à l'électro-distributeur 69. Lors de l'actionnement d'un bouton, la pompe hydraulique met en action le moteur hydraulique 70 qui, par l'intermédiaire d'une chaîne 52, entraîne en rotation les brosses de nettoyage 9, 10, tandis que lors de l'actionnement de l'autre bouton, le fluide hydraulique est appliqué sous pression par l'intermédiaire de la tubulure 76 au vérin 73, dont le piston relève l'articulation 74, la barre 75 et la barre 19 pivotant alors autour de l'arbre 22 dans le sens des aiguilles d'une montre, en amenant ainsi la barre 19 en position horizontale correspondant à un abaissement des brosses 9, 10 en position de travail sur le sol, tandis que le ressort pneumatique 27 (voir Fig. 1 et 3) assure un rappel automatique du dispositif 7, 8 et de la barre 19 en position haute de repos.

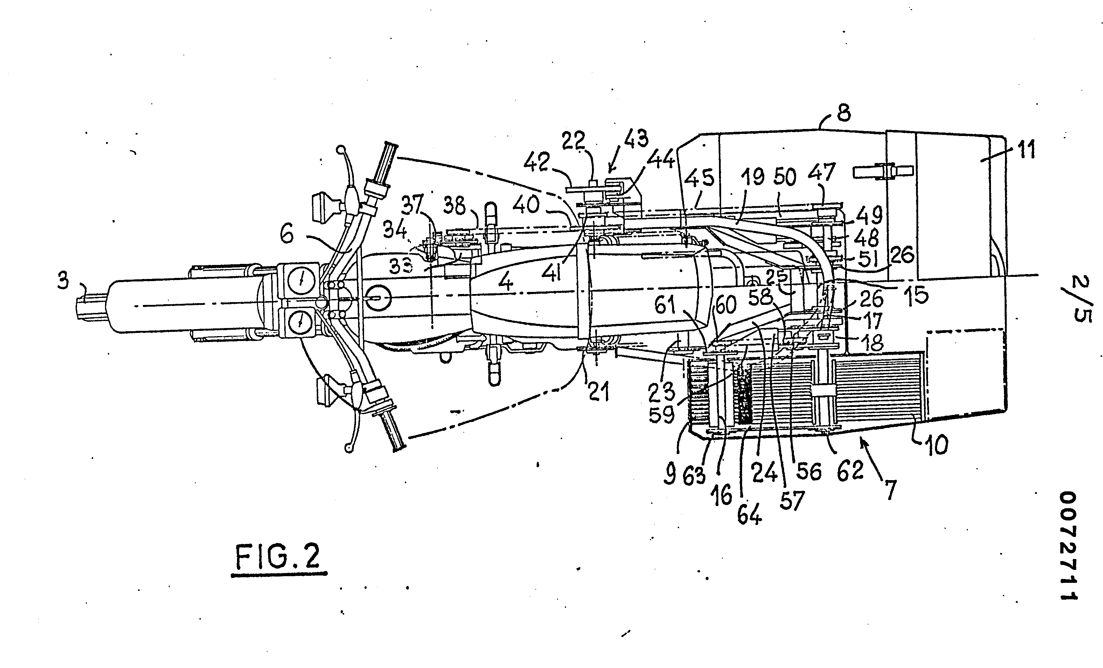

Sur la Fig. 5, on a en outre représenté une autre variante du motocycle conforme à l'invention, selon laquelle on prévoit une petite roue centrale 76 servant de butée au sol afin d'empêcher une pression trop importante d'application des brosses au sol et de maintenir une position cation des brosses au sol et de maintenir une position moyenne constante les brosses 9, 10 au niveau du sol. Cette roue est montée libre, au moyen de supports latéraux 77 par exemple, sur les flasques 26 formant paliers pour l'axe 15 des brosses 10. Son axe 78 étant décentré par rapport à l'axe 15, cette roue est réglable en hauteur au moyen d'un ensemble à vis 79. Il va de soi que ce dispositif peut être également prévu dans la première forme de réalisation du motocycle des Fig. 1 à 4.

Par ailleurs, dans les deux formes de réalisation, il est possible de prévoir un système permettant de projeter de l'eau ou un produit de lavage, formé par exemple d'eau pure ou d'eau mélangée à un produit désinfectant et décapant, dans les brosses 9 et/ou 10 ou un dispositif permettant d'imbiber les brosses avec un tel produit de lavage.

En outre, il est possible de prévoir dans un carter, non représenté, la distribution d'un produit de durcissement par exemple des excréments de chiens.

Il est enfin possible d'entraîner les brosses à une vitesse supérieure à celle que l'on utilise lorsqu'elles sont en contact avec le sol, de manière à permettre leur autonettoyage par imbrication des poils les uns dans les autres, qui se débarrassent ainsi des souillures souvent colmatées sur les poils.

REVENDICATIONS

1°) - Motocycle de ramassage de détritus de faible volume, tels que des excréments de chiens, des papiers ou autres, du type comportant un dispositif de nettoyage (7) à organes rotatifs (9, 10) de nettoyage, disposé dans un carter et mobile entre une position de repos éloignée du sol et une position de nettoyage, et des moyens d'entraînement du dispositif de nettoyage, caractérisé en ce que le carter (8) entoure, au moins partiellement et de façon symétrique, l'une des roues (3) du véhicule et que sa largeur est sensiblement égale à la largeur hors-tout du véhicule au niveau du guidon (6), et que les organes rotatifs de nettoyage (9, 10) logés dans le carter sont constitués par au moins un couple de brosses tournant en sens opposé.

2°) - Motocycle selon la revendication 1, caractérisé en ce qu'il est prévu deux couples de brosses rotatives (9, 10) disposés de part et d'autre de la roue (3) du véhicule et que les brosses (9, 10) de chaque couple possèdent des diamètres différents et sont de nature différente.

3°) - Motocycle selon l'une quelconque des revendications 1 ou 2, caractérisé en ce que le dispositif de nettoyage (7) est relié au cadre (1) du motocycle au moyen d'un équipage mobile (15, 17, 18, 19) permettant de faire osciller le dispositif de nettoyage (7) muni de son carter (8) entre une position relevée de repos et une position abaissée de nettoyage, ledit équipage mobile comprenant deux montants (17) symétriques par rapport au plan axial du véhicule, qui sont solidaires de manchons (18) enserrant un axe horizontal (19) du dispositif de nettoyage, et sont réunis au niveau de leur extrémité supérieure à une barre horizontale (19) de relevage montée de façon à pouvoir pivoter sur le cadre (1) du motocycle.

4°) - Motocycle selon la revendication 3, caractérisé en ce que la barre horizontale de relevage (19) possède une forme générale en U dont la base comporte une patte verticale (20) d'accrochage des extrémités supérieures des montants (17) et que l'axe horizontal soutenu (15) du dispositif de nettoyage (7) est l'axe commun des brosses de nettoyage de plus gros diamètre (10).

5°) - Motocycle selon la revendication 4, caractérisé en ce que l'axe (19) des brosses de gros diamètre (10) est, en outre, relié à l'axe (23) de support de la roue (3) du véhicule au moyen d'un cadre symétrique (24) en forme générale de V dont les extrémités peuvent pivoter sur l'axe (23) de la roue et dont la base est formée par une petite barre horizontale (25) portant des flasques latéraux (26) formant paliers pour l'axe (19) des brosses (10).

6°) - Motocycle selon l'une quelconque des revendications 3 à 5, caractérisé en ce qu'il comporte un dispositif réglable (27-32), de maintien automatique de l'ensemble du dispositif de nettoyage (7) et de son carter (8) en position relevée.

7°) - Motocycle selon la revendication 6, caractérisé en ce que le dispositif (27-32) de maintien du dispositif de nettoyage en position relevée est constitué par au moins un ressort pneumatique (27) dont une extrémité prend appui (28) sur le cadre (1) du motocycle et dont l'autre extrémité est reliée à la barre de relevage (19) par l'intermédiaire d'un organe (29) de réglage manuel du couple transmis par le ressort pneumatique (27) à la barre de relevage (19).

8°) - Motocycle selon la revendication 7, caractérisé en ce que l'organe de réglage manuel (29) est constitué par une molette de serrage (30) vissée sur une goupille filetée solidaire de l'extrémité du ressort pneumatique (27) et coulissant dans une glissière (31) ménagée dans un appendice saillant (32) de la barre de relevage (19).

- 13 -            **0072711**

9°) - Motocycle selon l'une quelconque des revendications 3 à 8, caractérisé en ce que les moyens d'entraînement du dispositif de nettoyage (8) comprennent des moyens d'abaissement de ce dispositif dans sa position de travail, constitués par un frein à disque (43) dont les mâchoires de serrage (44) sont solidaires de la barre de relevage (19) du dispositif de nettoyage (7) et dont le disque (42), relié par le système de transmission à un moteur d'entraînement (2), est monté sur un arbre (22) relié au cadre (1) du motocycle et constituant simultanément l'axe de rotation de la barre de relevage (19).

10°) - Motocycle selon l'une quelconque des revendications 1 à 9, caractérisé en ce que le système de transmission reliant le dispositif de nettoyage (7) au moteur d'entraînement (2) est formé par un embrayage (33), à commande manuelle ou automatique, relié au moteur (2) et à l'axe de rotation (15) des brosses (10) de gros diamètre par l'intermédiaire de chaînes de renvoi (35,38,45,52,59).

11°) - Motocycle selon la revendication 10, caractérisé en ce que le moteur d'entraînement (2) est le moteur du motocycle et que l'embrayage (33) entraîne les chaînes de renvoi (45, 52) des brosses de gros diamètre (10) par l'intermédiaire d'un pignon (41) solidaire de l'arbre (22) du frein à disque (43).

12°) - Motocycle selon l'une quelconque des revendications 3 à 8, caractérisé en ce que les moyens d'entraînement du dispositif de nettoyage (8) sont des moyens hydrauliques constitués par une pompe hydraulique (65) reliée par un électro-distributeur hydraulique (67) à un réservoir hydraulique (68) et, d'une part, à un vérin hydraulique (73) d'abaissement du dispositif de nettoyage (8) et, d'autre part, à un moteur hydraulique (70) d'entraînement des brosses de nettoyage (9, 10).

13°) - Motocycle selon la revendication 12, caractérisé en ce que le vérin hydraulique (73) se compose d'un cylindre solidaire du cadre (1) du motocycle et d'un piston relié par une articulation (74) à une barre (75) solidaire de la barre (19) de relevage du dispositif de nettoyage (8) et située dans le prolongement de cette dernière au-delà d'un axe fixe de pivotement (22) solidaire du cadre (1).

14°) - Motocycle selon l'une quelconque des revendications 12 et 13, caractérisé en ce que le moteur hydraulique (70) d'entraînement des brosses est monté dans la liaison (17) reliée, d'une part, à l'extrémité arrière de la barre (19) et, d'autre part, au moyen d'une transmission à chaîne (52), à l'axe (15) portant les brosses (10).

15°) - Motocycle selon l'une quelconque des revendications 10 à 14, caractérisé en ce que chacune des brosses (9) de petit diamètre est entraînée au moyen d'une chaîne de renvoi (59) et d'un engrenage démultiplicateur (54, 55) par l'axe (15) de la brosse associée de gros diamètre (10).

16°) - Motocycle selon la revendication 15, caractérisé en ce que la chaîne de renvoi (57) et l'engrenage démultiplicateur (54, 55) sont logés dans un carter (59) solidaire du manchon (18) enserrant l'axe (15) de rotation des grosses brosses (10) et solidaire d'un montant (17) relié à la barre de relevage (19) du dispositif de nettoyage (7).

17°) - Motocycle selon l'une quelconque des revendications 2 à 16, caractérisé en ce que le diamètre des grandes brosses (10) est égal à une valeur comprise entre le double et le triple du diamètre des petites brosses (9).

18°) - Motocycle selon la revendication 16, caractérisé en ce que les petites brosses (9) sont des brosses dures, par exemple en polypropylène, et que les grosses brosses (10) sont des brosses souples, par exemple en polyhexaméthylène adipamide, et que la distance entre les axes de rotation (15, 16) d'un couple de brosses est inférieure à la somme de leurs rayons de sorte qu'elles tournent en s'imbriquant l'une dans l'autre.

19°) - Motocycle selon l'une quelconque des revendications 17 et 18, caractérisé en ce que chaque petite brosse (9) est montée flottante, au moyen de roulements à rotule (61, 63, 64) entre un flasque latéral (64) monté fou sur l'axe (15) des grosses brosses, et le carter (57) de la chaîne de renvoi entraînant la petite brosse (9), le roulement à rotule (61) reliant la petite brosse à ce carter étant monté de manière à présenter, par rapport au plan horizontal, un flottement limité en haut par le carter du dispositif de nettoyage (7) et en bas par une butée.

20°) - Motocycle selon l'une quelconque des revendications 17 et 18, caractérisé en ce que, au niveau (14) de la partie supérieure du pourtour des brosses souples de gros diamètre, le carter (8) du dispositif de nettoyage (7) comporte un rayon inférieur à celui des brosses (10), de manière à comprimer leurs poils et comporte, en cet endroit, un revêtemnet intérieur en polyéthylène non adhérent.

21°) - Motocycle selon l'une quelconque des revendications 1 à 20, caractérisé en ce que le carter (8) du dispositif de nettoyage (7) comporte, dans l'espace d'éjection des brosses de gros diamètre (10), une capacité permettant la mise en place d'au moins un sec (13) recevant la matière décollée du sol par les brosses (9, 10) et comportant un capot articulé rabattable (11).

22°) - Motocycle selon l'une quelconque des revendications 1 à 21, caractérisé en ce qu'il comporte une petite roue centrale de butée au sol (76) solidaire des flasques (26), formant paliers pour l'axe (15) des brosses (10), au moyen de supports latéraux (77) et réglable en hauteur par l'intermédiaire d'un ensemble à vis (79).

FIG.1

FIG.2

0072711

FIG.3

FIG.4

FIG.5

Office européen
des brevets

**RAPPORT DE RECHERCHE EUROPEENNE**

00727.11

Numéro de la demande

EP    82 40 0140

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A,D | --- <br> FR-A-2 465 836   (DECAUX) <br><br> *Page  2,  lignes  4-11;  page 3, lignes 6-12,17,18,22-24,26-28,31-35; page 4, lignes 20,21,23-25,32-33; figures 1-2* | 1-3,6, 7,10, 11,18, 20,21 | E 01 H    1/04 <br> B 62 J   39/00 <br> B 62 K   11/00 |
| A | --- <br> FR-A- 534 953   (JACQUELIN) <br> *Page  1,  lignes 1-5,32-43; page 2, lignes 29-35,39-42,46-51; figures 1-3* | 1 | |
| A | --- <br> DE-C- 579 401   (SPIESS) <br> *Page  1,  lignes 1-8,49-58; page 2, lignes 18-23; figures 1,2* | 1,20 | |
| A | --- <br> US-A-3 186 021   (KRIER et al.) <br> *Colonne 6, lignes 13-15; colonne 9, lignes 27-29,39,40; colonne 11, lignes 41-45; colonne 13, lignes 12,13; figures 11,17,20* | 1,2 | DOMAINES TECHNIQUES RECHERCHES (Int. Cl. 3) <br><br> A 47 L <br> B 60 R <br> B 62 D <br> B 62 H <br> B 62 K <br> E 01 H |
| A | --- <br> DE-C- 386 095   (WOERNER) <br> *Page  1,  lignes 1-3;  page  2, lignes  8-12,16-18,20-23; figures 1,2* | 1 | |
| | --- <br> -/- | | |

Le présent rapport de recherche a été établi pour toutes les revendications

| Lieu de la recherche <br> LA HAYE | Date d'achèvement de la recherche <br> 15-11-1982 | Examinateur <br> SCHUMAN R. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

**0072711**
Numéro de la demande

Office européen
des brevets

**RAPPORT DE RECHERCHE EUROPEENNE**

EP 82 40 0140

| | **DOCUMENTS CONSIDERES COMME PERTINENTS** | | Page 2 |
|---|---|---|---|

| Catégorie | Citation du document avec indication, en cas de besoin, des parties pertinentes | Revendication concernée | CLASSEMENT DE LA DEMANDE (Int. Cl. ³) |
|---|---|---|---|
| A | GB-A-1 061 624 (MORRIS) *Page 1, lignes 15-25,64-68,80-84; page 2, lignes 57-59; figures 1,2* | 1 | |
| A | US-A-1 849 941 (LOFSTRAND) *Page 1, lignes 1-6,14-17,69,70,73-78; page 2, lignes 10-26,40-45,56-71; page 3, lignes 43,44,48-67; figures 1,2,5* | 1-3,15 | |
| A | GB-A-1 093 412 (WISEMAN) *Page 1, lignes 9,10,12,16-40,67-86; page 2, lignes 5-10,31-36,48-57; figures 1,4* | 1-3,11 ,17,18 ,22 | |
| A | DE-A-1 805 518 (FERNMELDE- UND ELEKTROBAU SIEBERT U.TIETZ) *Page 3, lignes 5-11,20-25; page 4, lignes 1,14-22; figure 1* | 1,2,20 | **DOMAINES TECHNIQUES RECHERCHES (Int. Cl. ³)** |
| A | US-A-3 990 125 (SAIIA) *Colonne 1, lignes 4-7; colonne 2, lignes 41-43; colonne 3, lignes 3-13,20-23; colonne 4, lignes 29-42; colonne 6, lignes 23-36; figures 1,3,4,6* | 1,2,11 -13,18 | |

--- -/-

Le présent rapport de recherche a été établi pour toutes les revendications

| Lieu de la recherche LA HAYE | Date d'achèvement de la recherche 15-11-1982 | Examinateur SCHUMAN R. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

## Office européen des brevets

# RAPPORT DE RECHERCHE EUROPEENNE

| Catégorie | Citation du document avec indication, en cas de besoin, des parties pertinentes | Revendication concernée | CLASSEMENT DE LA DEMANDE (Int. Cl. ³) |
|---|---|---|---|
| | **DOCUMENTS CONSIDERES COMME PERTINENTS** | | Page 3 |
| A | FR-A- 767 351 (KOHN et al.)<br><br>*Page 1, lignes 1-10,20-24; page 2, lignes 15-20,22-24,29-32,58-74,87,88,97-104; page 3, lignes 4-7; figures 1-3* | 1-3,10,11,15 | |
| A | FR-A- 668 556 (SOC. D'OUTILLAGE MECANIQUE ET D'USINAGE D'ARTILLERIE)<br>*Page 1, lignes 1-7,49-58; page 2; lignes 1-14,60-76; figures 1-4* | 3,4,10,11 | |
| A | DE-C- 139 866 (COLLINS)<br><br>*Page 1, lignes 1-11,36-48; page 2, lignes 44-55,79,80,84-101; figures 1,2* | 3,4,10,11 | |
| A | DE-B-1 026 771 (FA.M.STEICHER)<br><br>*Colonne 1, lignes 1-9; colonne 3, lignes 15-27,39-45; figures 1,3,4* | 3,6,7,13 | DOMAINES TECHNIQUES RECHERCHES (Int. Cl. ³) |
| A | FR-A- 458 914 (WHITE)<br>*Page 3, lignes 55-67,74-85,88-100; figures 1-3* | 3,6,7 | |
| | ---     -/- | | |

Le présent rapport de recherche a été établi pour toutes les revendications

| Lieu de la recherche<br>LA HAYE | Date d'achèvement de la recherche<br>15-11-1982 | Examinateur<br>SCHUMAN R. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

**0072711**
Numéro de la demande

**Office européen**
**des brevets**

**RAPPORT DE RECHERCHE EUROPEENNE**

EP  82 40 0140

## DOCUMENTS CONSIDERES COMME PERTINENTS

Page  4

| Catégorie | Citation du document avec indication, en cas de besoin, des parties pertinentes | Revendication concernée | CLASSEMENT DE LA DEMANDE (Int. Cl. ³) |
|---|---|---|---|
| A | GB-A-1 183 575  (JOHNSTON BROTHERS ENGINEERING LTD) *Page        1,        lignes 11-23,69-74,77-79; page 2, lignes 3-5,15-26,33-41,58-64; figure 1* | 3,7,11 ,12,18 | |
| A | DE-C- 343 650  (BOCK) *Page 1, lignes 1-5,9-12; page 2, lignes  1-6,10-13,51-60;  figures 2-4* | 9 | |
| A | FR-A-1 007 574  (LE MATERIEL DE VOIRIE) *Page    1,    colonne   de   droite, lignes    5-16,19-22,32-35,37-40; figure 1* | 12,13 | |
| A | DE-A-1 658 412  (RUDOLF RAIBLE MASCHINENBAU) *Page   5,   lignes   1-13;   page 7, lines 8-12,16-24; figure 2* | 19 | **DOMAINES TECHNIQUES RECHERCHES (Int. Cl. ³)** |
| A | DE-B-1 251 783  (GERA GEBRÜDER RAUSCH) *Colonne  5,   lignes  11-14,21-32; figures 1,6* | 20 | |

Le présent rapport de recherche a été établi pour toutes les revendications

| Lieu de la recherche LA HAYE | Date d'achèvement de la recherche 15-11-1982 | Examinateur SCHUMAN R. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82